# EUROPEAN PATENT APPLICATION

(11) **EP 1 388 523 A2**
(43) Date of publication of application: **11.02.2004**
(21) Application number: 03254697.0
(22) Date of filing: 28.07.2003
(51) Int. Cl.: C01G 49/00, C01G 49/02

(54) **Low sulfur red iron oxide useful as a catalyst or catalyst component and a process for making low sulfur red iron oxice**

(30) Priority: 05.08.2002 US 212196
(71) Applicant: Elementis Pigments, Inc., East St.Louis, IL 62204 (US)
(72) Inventor: McAulay, Hugh Joseph, Lanchester, County Durham DH7 0NS (GB); Chan, Fabien, Lantou, Hong Kong (HK); Podolsky, George, Kirkwood, MO 63122 (US)
(74) Representative: Hucker, Charlotte Jane

(57) **Abstract**

A process for making red iron oxide containing less than 1500ppm sulfur is described. The iron oxide is useful as a catalyst or catalyst ingredient in a wide variety of processes and in a preferred embodiment has an acicular shape.

## Description

### FIELD OF INVENTION

The present invention is directed to red iron oxide containing low sulfur and a process for making such iron oxide. The iron oxide compositions involved are particularly useful for catalysts in a wide variety of chemical processes. These include dehydrogenation of ethylbenzene for making styrene, High Temperature Shift (HTS) reactions to produce hydrogen and also in ammonia synthesis, as well as Fischer-Tropsch reactions, formaldehyde synthesis and de-hydrohalogenation to mention but a few.

### BACKGROUND OF INVENTION

### In General

Synthetic iron oxides have been used as pigments in a variety of systems for over one hundred years and natural iron oxides have been around for a great deal longer. Synthetic red iron oxide, or ferric oxide (Fe₂O₃), is a well-known commercial product that can be manufactured using several techniques. Among the more common methods are direct precipitation, thermal oxidation of magnetite (black iron oxide), thermal decomposition of ferrous sulfate and dehydroxylation of goethite (yellow iron oxide). The particular production route chosen will result in unique products with individual properties and characteristics that, while causing them to act similarly as a pigment, can lead to major differences in their usefulness as a catalyst or catalyst component. These production routes are well documented but, in summary:
■ Direct precipitation - oxidation of ferrous sulfate to ferric oxide at elevated temperature (70-100°C) and precipitating the newly produced ferric oxide on to a nucleation point. Resulting particle shape is rhombohedral.
■ Thermal oxidation of magnetite - controlled oxidation of black iron oxide to red ferric oxide, normally in a rotary kiln, at temperatures ranging from 700-900°C. Resulting particle shape from this process is spheroidal.
■ Thermal decomposition of ferrous sulfate - ferrous sulfate heptahydrate is converted to the monohydrate before being thermally decomposed to ferric oxide at elevated temperatures (600-900°C) in a rotary kiln. The resulting particle shape from this process is spheroidal.
■ Dehydroxylation of goethite - goethite, or yellow iron oxide (ferric oxyhydroxide), is converted to red ferric oxide by condensation of a water molecule during the dehydroxylation process at elevated temperatures. This has been in the past achieved at temperatures ranging from 700-1000°C in a rotary kiln. The resulting particle shape from this process is elongated nodular, i.e. not the acicular shape desired and having a sintered rounded surface topography.

Iron oxides have found use as a key ingredient in catalysts for the chemical industry, especially in hydrogen and petrochemical processes. Iron oxides have long been used as catalysts in de-sulfurization reactions, an application that is still important today. In more recent years, promoted iron oxides have been used as more efficient activated catalysts in an increasing variety of chemical processes. Use has been made of the different characteristics and particle shapes associated with the different manufacturing routes of the different types of iron oxide. In HTS reactions, for example, the catalyst is usually in the form of a tablet or pellet, and the acicular nature of certain iron oxide helps to improve the strength of the tablet.

Whereas iron oxides have served these industries well, product contaminants, derived from the iron oxide manufacturing processes, can act as poisons in certain applications thereby limiting the quantity of iron oxide that can be used. One such particular poison is sulfur that can be liberated from the crystal structure of the iron oxide during high temperature reaction phases. The liberated sulfur will then migrate as a gaseous compound with the reaction products to the next stage in the process where it can act as a poison. Another problem for catalyst producers is the presence of chlorides. As with sulfur, chlorides can be liberated from the crystal structure of the iron oxide, potentially forming catalytic poison compounds and perhaps even corrosive acidic products that will damage the structure of reaction vessels and pipework. For this reason, iron oxides utilizing chloride technology are not often used in catalysis even though they can be very low in sulfur.

It is well known in the industry that sulfur can be removed from iron oxide by high temperature processing, and iron oxide producers have employed this technique in the past. As already described, the thermal decomposition of ferrous sulfate, the oxidation of magnetite, and the dehydroxylation of goethite all utilize temperatures up to 900°C, high enough to liberate sulfur. In those catalytic applications where particle shape is less important, any ferric oxides that result from these processes can be used. However, where the particle shape required for the application is important and has to be truly acicular, for example where tablet strength is important, the deformation of the crystal that occurs at such high temperatures results in the ferric oxide imparting little or no strength benefits to the catalyst pellet.

### Prior Developments

The use of iron oxide as a dehydrogenation catalyst is described in U.S. Patent No. 5,962,757. The patent describes the use of pre-doped iron oxide in the conversion of ethylbenzene to styrene.

Iron oxide, along with a large number of other materials, are described as useful for producing microstructures as a part of making nanostructured catalysts for use in fuel cells and sensors used in a membrane electrode assembly in U.S. Patent No. 6,040,077.

U.S. Patent No. 5,668,078 describes a composition of restructured iron oxide particles and a method of making such particles for use as catalysts. The patent recognizes that the shape, size and crystal structure of the iron oxide is important but concludes that these characteristics are most often established empirically. The patent also recognizes the importance in iron oxide-based catalysts of having an acicular or branched acicular shape but teaches the importance of restructuring such shape by this use of a large variety of restructuring agents.

Recent U.S. Patent No. 6,271,168 to Toda Kogyo Corporation describes a composite catalyst useful in processes to decompose aromatic organohalogen compounds such as dioxins, one portion of which are iron compound particles. The patent indicates awareness that catalysts for such processes should have low levels of sulfur and that spindle - shaped and acicular particle shapes for the iron compound particles are preferred.

Recent U.S. Patent No. 6,117,228 describes an improved process for making yellow iron oxide pigments.

The assignee of the instant invention, Elementis Pigments Inc., and its predecessors has manufactured iron oxide in both the United States and Europe for over 50 years and maintains laboratory facilities in these geographic areas researching improvements in the field.

For example, U,S. Patent No. 5,401,313 issued to Elementis Pigments, Inc., the assignee of this invention, describes iron oxide created with an added step of coating the iron oxide pigment particles with electric charges. U.S. Patent No. 5,853,476 also issued to Elementis Pigments, Inc. shows a compaction process to make iron oxide granules. Elementis Pigments, Inc. pending U.S. Patent Application No. 09/530,913 describes an extrusion process for making iron oxide granules.

### OBJECT OF THE INVENTION

It is an important object of this invention to produce iron oxide substantially free of sulfur and optionally chloride by a relatively easy and inexpensive process that does not result in unwanted deformation of the iron oxide.

The invention will substantially achieve the iron oxide acicularity desired by catalyst users and further enhance its properties by a series of careful washing and low temperature calcination steps. Although an acicular shape is not an absolute requirement for all catalyst functions employing iron oxide, it is very useful in a variety of catalyst. functions and quite crucial in some.

The enhancements will also prevent the formation of nodular or sintered crystals associated with high temperature calcination that can lead to problems with catalyst pellet strength where that is an important function.

The production process used in this invention does not preclude the addition of promoters and other chemicals to the iron oxide during the yellow iron oxide precipitation, red iron oxide formation, as well as during the initial washing and drying steps and the final washing and drying stage.

### DETAILED DESCRIPTION

The present invention in one important aspect involves a process for producing low sulfur red iron oxide by a process that starting with yellow iron oxide containing a sulfur content greater than 0.2% (2000 ppm) and includes the steps of:
a) washing the yellow iron oxide at a pH approximately at or above the isoelectric point of the yellow iron oxide;
b) calcining the product of step a) at a temperature no greater than 500° C for a period of about 5 minutes to about 480 minutes; and then
c) washing the product of step b) to a pH approximately at or above the isoelectric point of the iron oxide;
thereby forming iron oxide where the sulfur content of the red iron oxide is lower than 0.15% (1500 ppm).

The inventive process works starting with any yellow iron oxide that is produced by precipitation no matter the initial total sulfur content of the yellow iron oxide produced. However, it is an obvious conclusion that steps taken to lower the total sulfur during the iron oxide precipitation process will be of benefit to this inventive process for lowering sulfur. Such steps can include special selection of raw materials used to make the iron oxide such as the steel and acid, and also the use of a nitrate seed route prior to precipitation in sulfate, for example.

Representative manufacturing processes to make iron oxide can vary. Generally the processes may be categorized into two types: 1) precipitation; and 2) thermal decomposition, such as calcination and gas phase chemical vapor deposition. Some products can be manufactured by a combination of these two general process routes. All yellow oxides produced by the precipitation route are useful for this invention.

### 1) Precipitation - general description

Yellow iron oxides are precipitated products that rely on careful control of a complex series of liquid-solid, gas-solid, and gas-liquid reactions. Nucleation and precipitation/crystallization kinetics are the preferred key to preparation of the correct chemical composition, particle size, particle size distribution, particle morphology, and ultimately, the desired color.

Yellow (goethite) iron oxide can be made from a modified version of the Penniman-Zoph process in which a nucleus or seed particle is grown to a target size. The source of the nutrient for this particle growth is continuously provided by dissolution of iron. The iron is a specially selected grade that is dissolved in an acidic ferrous sulfate solution and oxidized with finely-dispersed air.

The following reactions (not balanced) depict the seed and growth (generation) stages of representative precipitation processes:

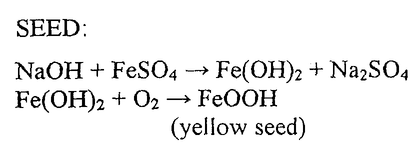

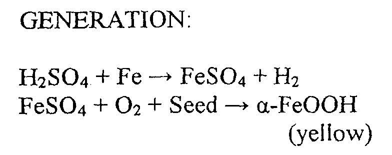

Following the seed generation stage, the yellow iron oxide slurry is then filtered and is then washed, dried, milled, and packaged. The pH of the washing step is adjusted to approximately the iso-electric point (usually greater than 7). The yellow iron oxide is preferably prepared by a direct precipitation process in which the nutrient is an iron salt solution.

We have not included references to precipitated red and black processes.

### 2) Calcination - general description

Solid state reactions with strict control of gas-solid equilibria characterize the calcination manufacturing processes used to prepare the dehydroxylated red and copperas red iron oxides.

Calcination of yellow iron oxide is a dehydroxylation of the oxyhydroxide to yield the red iron oxide as depicted in the following reaction.

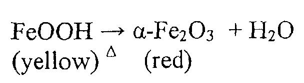

To be complete, there is a class of copperas red iron oxides not covered by the calcination of yellow iron oxide aspect of this invention. While we use the term red iron oxide to define our invention, we specifically exclude from its meaning this class of red iron oxide. These iron oxides are produced by a calcination process that results in a hematite with chemical purity and chroma. These are often called copperas reds. A purified ferrous sulfate solution can be further purified during evaporation and crystallization stages. The resulting ferrous sulfate heptahydrate crystals (FeSO₄•7H₂O), also known as "copperas," are dried and dehydrated to ferrous sulfate monohydrate (FeSO₄•H₂O).

The monohydrate is then oxidized during a calcination step to the hematite (α-Fe₂O₃) or copperas red iron oxide particles. The process to make copperas reds can be summarized by the following chemical reaction (not balanced):

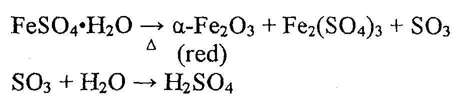

As stated above, the starting material for the process of this invention is yellow iron oxide, also called goethite (from its natural mineral name) and ferric oxyhydroxide.

The first step of our invention is washing the yellow iron oxide to at least reduce or remove alkali soluble salts including those containing sulfur. Such washing comprises a pH adjusted wash water solution wherein the alkaline adjustment is achieved for example through the use of an alkali such as potassium carbonate or sodium hydroxide.

The next step ofthis invention is referred to by us as gentle calcination and is a dehydroxyation at a low temperature no greater than 600°C, and preferably no greater than 500°C, and for a set period of time

Calcination is generally understood to be a process that heats a chemical to a very high temperature, but below its melting point, to bring about a state of thermal decomposition or a phase transition other than melting. This includes thermal dissociation of volatile chemicals viewed as contaminants or to effect changes in such chemicals (eg. oxidation or pulverization) which removes them indirectly. Calcination is clearly understood by scientists not to encompass drying.

Preferred for this invention are temperatures of about 300-500°C and a residence time of 50 to 90 minutes, although about 5 to around 480 minutes will also provide satisfactory products. Known processes for calcining yellow iron oxide use substantially higher temperatures with sintering of the iron oxide often the goal or the result although not the goal. It has been found that such sintering greatly deforms the iron oxide particles making it clearly difficult, if not impossible, to achieve the most desired physical acicular shape for catalyst use. In addition, such iron oxide calcination processes often add certain additives called anti-sintering additives, which are most often ineffective and costly and which themselves become contaminants in the final iron oxide product. In addition, often the gentle calcination of this invention can result in a significant increase in iron oxide surface area of more than 100 square meters/per gram.

In another important aspect of the invention it has been surprisingly discovered that if the iron oxide formed as a result of the above described gentle calcination process (or other processes of the prior art) is then subjected to a washing process, where the pH of the wash is approximately at, or above, the iso-electric point of the iron oxide, then even lower levels of sulfur are obtained in the final iron oxide. Isoelectric point is defined as the pH at which the charge surrounding the particle surface is approximately zero. It may also be referred to as point of zero charge. One method of measurement of assuring the proper pH can be to determine the electrokinetic sonic amplitude using an instrument such as a Matec ESA-8000. In yellow iron oxides a pH range of 7.0 to 10.0, and in red iron oxides a range of 7.0 to 11.0, are often easily found to be the point of zero charge. "Absolute" values of isoelectric point are, of course, also somewhat dependent on test method. In general, the isoelectric point of red is often higher than that of yellow iron oxide.

The pH of the washing steps should be generally higher than 7 and the wash time of preferably a minimum of 30 minutes at a temperature of at least 20 degrees C or higher be used.

The inventive process used substantially lowers the sulfur content in the red iron oxide to less than 2000 ppm (0.2%), and preferably less than 1500 ppm (0.15%) as well as often lowering the salt content in the final product. Low chloride contents are maintained throughout the inventive process and surprisingly, often can be lowered as part of the process. Importantly, the gentle calcination does not deform or degrade the particle shape of the red iron oxide and no or little sintering occurs.

In addition it has been also discovered, if in the washing step used for the yellow iron oxide that is to be gently calcined, the pH of the wash water is at, or above, the iso-electric point of the starting yellow iron oxide product, more improved results can be obtained.

In a preferred embodiment, applicants' low sulfur iron oxide particles are formed having an acicular shape. This shape is preferred because it can, where required, provide strength characteristics to catalyst pellets. A variety of other irregular shapes made using the process of this invention have been found to provide possibly acceptable use, however, acicular iron oxide is the most preferred. An acicular particle is defined to be relatively long and thin with its length at least about 1.2 times its width to as much as 40.0 times its width. Representative ratios of the average particle size produced by this invention can vary from about 0.05 to 1.30 µm long to from about 0.01 to 0.40 µm wide, keeping in mind the 1.2 times lower limit for the particles involved. Transparent iron oxides i.e. very small particle size iron oxides of less than 0.2 µm size can also be utilized for this invention.

What is required, however, is that these particles be prepared by a process, as described herein.

The low sulfur "purity" of these red iron oxide particles renders processes containing this material suitable for processes where sulfur is unwanted.

It is to be understood that modifying elements can be added at any stage of the process stream of this invention beginning with the precipitation stage. For example, the yellow iron oxide can be undoped or doped with promoter elements.

There is no teaching or suggestion that applicants are aware of to make red iron oxide particles of the type described herein or to use such red iron oxide as a catalyst or catalyst component for processes such as those contemplated by applicants, namely as 1) dehydrogenation and 2) ammonia synthesis. Thus the use of applicants' low sulfur iron oxide, in the manner indicated, provides totally unexpected results with regard to the ability of this material to afford the customer both lower costs and better final products.

### EXAMPLE I:

In this Example, the following steps are used to illustrate the invention herein.

Yellow iron oxide produced by a precipitation process was washed with water and was tested for sulfur and chloride. The same material was further washed at an alkali pH and re-tested for sulfur content before being calcined at 300°C for 120 minutes. Following calcination, the red iron oxide that was formed was washed to a pH at, or above, its iso-electric point before being dried. It was then re-tested for sulfur and chloride.

The washing process consists of producing a 10% slurry of iron oxide before addition of an alkali. In this example, potassium carbonate was used but equally other alkalis such as sodium hydroxide or ammonium hydroxide could be used. The pH of the slurry was raised to the desired level and the mix agitated for 60 minutes. This mix time can be less than 60 minutes but should not be less than about 15 minutes.

| Analysis | Crude Yellow | Yellow post alkali wash | Gentle Calcined red post alkali wash |
|---|---|---|---|
| Total Sulfur (%) | 0.29 | 0.18 | 0.10 |
| Total Chloride (ppm) | 130 | not measured | 35 |
| SSA (m²/g) | 19.8 | 7.0 | 68.7 |
| Alkali used | K₂CO₃ | K₂CO₃ | K₂CO₃ |
| Particle deformation | None | None | None |
| % less than 10 microns | 100 | 100 | 100 |

Similar results have been obtained for samples of yellow iron oxide ranging from 100g to 600kg.

### EXAMPLE II:

In this Example, the following illustrates the importance of calcination temperature to particle integrity.

Two samples of yellow iron oxide, produced by a precipitation process, were well washed with water, and then calcined at 900°C and 950°C respectively. Following calcination, the red iron oxide that was formed was tested for total sulfur content.

| | | |
|---|---|---|
| Analysis | 900°C | 950°C |
| Total Sulfur (%) | 0.029 | 0.026 |
| SSA (m²/g) | 2.3 | 2.9 |
| Particle deformation | Yes | Yes |
| % less than 10 microns | 85 | 100 |

### Discussion of Results:

There is clear evidence that washing the yellow iron oxide, no matter how vigorous or to what pH, will not remove sulfur contained within the core of the crystal itself.

Using our invention, its speculated that the use of low temperature calcination substantially increases the surface area of the particle, thereby allowing the second wash to penetrate deep into the crystal structure. It is this mechanism that is also likely to promote increased removal of sulfur, previously locked away, such that levels as low as 0.09% have been achieved.

We speculate that the low temperature calcination promotes careful dehydroxylation of the yellow iron oxide, causing a phase transition from alpha iron oxyhydroxide to alpha ferric oxide and changing its color to red. As the condensed water is removed, small micropores are formed throughout the crystal structure that allow the ingress of the pH modified wash water.

### Example III:

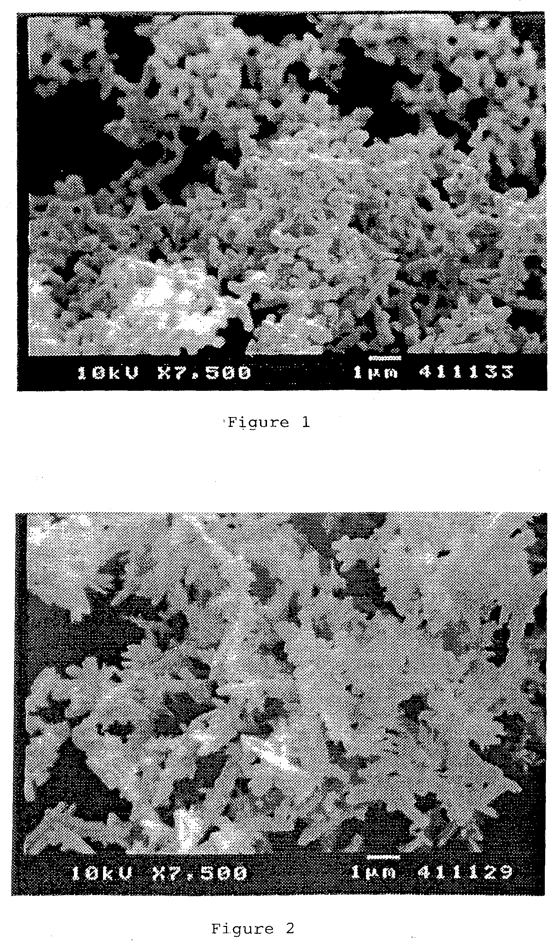

Using scanning electron microscopy, two photos were taken of samples of red iron oxide. These photos are shown in Figures 1 and 2. The first micrograph (Figure 1) shows the deformed or nodular shape obtained using a prior art process of calcination of iron oxide at 900° C. The second micrograph (Figure 2) shows red iron oxide made using a process according to the present invention in which iron oxide has been calcined at 300° C. Figure 2 shows the more regular needle-like acicular shape obtained using this process.

### Discussion of Results:

It is clear that, whereas high temperature calcination may substantially reduce sulfur, there is massive particle deformation associated with this removal.

The foregoing disclosure has been set forth merely to illustrate the invention and is not intended to be limiting. Since modifications of the disclosed embodiments incorporating the spirit and substance of the invention may occur to persons skilled in the art, the invention should be construed to include everything within the scope of the appended claims and equivalents thereof.

## Claims

1. A process of making iron oxide particles with a lowered sulfur content comprising:
a) obtaining an iron oxide containing sulfur and
b) washing such iron oxide approximately at or above its isoelectric point, thereby forming iron oxide particles wherein the sulfur content of the iron oxide particles has been reduced.

2. A process according to claim 1, wherein low sulfur red iron oxide is produced from yellow iron oxide containing a sulfur content greater than 2000 ppm, and is useful as a catalyst or a catalyst component, the process comprising:
a) precipitating yellow iron oxide;
b) washing the yellow iron oxide at a pH approximately at or above the isoelectric point of the yellow iron oxide;
c) calcining the product of step (b) at a temperature no greater than 600°C for a period of 5 minutes to 480 minutes; and then
d) washing the product of step (c) at a pH approximately at or above the isoelectric point of the iron oxide product;
thereby forming red iron oxide wherein the sulfur content of the red iron oxide is lower than 2000 ppm (0.2%).

3. A process according to claim 2, wherein the sulfur content of the red iron oxide is lower than 1500 ppm (0.15%).

4. A process according to claim 2 or claim 3, wherein said low sulfur red iron oxide has an acicular or substantially acicular shape.

5. A process according to any of claims 2 to 4, wherein the low sulfur iron oxide is made up of particles that have an average particle size of from 0.05 to 1.30 µm long and from 0.01 to 0.40 µm wide.

6. A process according to any of claims 2 to 5, wherein the chloride content of said low sulfur iron oxide is less than 200 ppm.

7. A process according to any of claims 2 to 6, wherein the calcination step (c) is carried out at a temperature no greater than 500°C.

8. A process according to claim 7, wherein a process step is employed prior to the calcining step of paragraph (c) and such step is selected from the group consisting of filtering, drying or both.

9. A process according to claim 8, wherein the red iron oxide particles contain less than 1200 ppm of sulfur.

10. A red iron oxide obtainable by a process as defined in any of claims 2 to 9.

11. An acicular red iron oxide containing less than 1500 ppm of sulfur.

12. A process using a low sulfur red iron oxide as defined in claim 10 or claim 11 as a catalyst or a component of a catalyst.

13. A process according to claim 12, selected from the group consisting of high temperature shift reactions, hydrogen and ammonia synthesis, dehydrogenation and processes for decomposing organohalogens.
